# EUROPEAN PATENT SPECIFICATION

(11) **EP 0 932 531 B1**
(45) Date of publication and mention of the grant of the patent: **12.09.2001**
(21) Application number: 97932917.4
(22) Date of filing: 22.07.1997
(51) Int. Cl.: B60R 22/46

(54) **PRETENSIONER**
STRAMMVORRICHTUNG
DISPOSITIF DE PRETENSION

(30) Priority: 08.08.1996 GB 9616638
(43) Date of publication of application: 04.08.1999
(73) Proprietor: BREED AUTOMOTIVE TECHNOLOGY, INC., Lakeland, County of Polk, Florida (US)
(72) Inventor: ROMEO, Bonino, I-10088 Volpiana (IT); COPPO, Fulvio, I-10045 Piossasco (IT)
(74) Representative: Freeman, Jacqueline Carol
(86) International application number: GB9701967
(87) International publication number: WO9806605

(56) References cited:
- WO-A-93/06375
- DE-A- 4 406 497
- DE-A- 4 441 195
- GB-A- 2 036 908
- US-A- 5 039 125

## Description

The present invention relates to a pretensioner for a vehicle safety restraint and particularly to a tamper-proof fitting therefor.

Modern pretensioners operate at very high levels of force to rapidly take up the slack in a safety belt in a crash situation. The pretensioner may be sited at the retractor end of the belt and is connected to rapidly rewind the belt webbing reel. The force required is generated either mechanically by a powerful pre-stressed spring or by pyrotechnic means and an armed pretensioner requires careful handling and safety procedures must be observed. The pretensioner is supplied to the vehicle manufacturer or authorsied fitter in a disarmed state so that it is safe to transport. It is only armed when it has been correctly fitted in the vehicle.

However, a problem arises if the pretensioner is removed from the vehicle after fitting. In this case the pretensioner is armed and will constitute a safety hazard in handling and transport.

Furthermore, unscrupulous dealers and fitters may be tempted to dispose of these second hand pretensioners to fit in other vehicles. This is undesirable because they will not have been checked by the manufacturer or other authorised and trained people. They may then constitute a safety hazard or may fail to operate correctly in a crash situation.

There is known from DE-A-44 06 497 a pretensioner fitting arrangement according to the preamble of claim 1, comprising an arming bracket operable to arm the pretensioner when the bracket is fitted and having means for limiting access to the means by which the pretensioner is fitted to the vehicle. In WO 93/06375 a tamper-proof expandable bolt with two heads is described but in the totally different field of mining.

Known pretensioner fitting and arming arrangements are complicated, expensive and difficult to fit.

According to the present invention there is provided a pretensioner fitting arrangement comprising an arming bracket having a flange operable to arm the pretensioner when the bracket is fitted, and having means for limiting access to the means by which the pretensioner is fitted to the vehicle, a screw having two head parts, coaxial one with the other but arranged so that one had part is covered, for example by a sealing ring, the two head parts being connected together by a section which is adapted to break when a torque of a predetermined level is applied to it.

At least one and preferably both of the screw head parts may be hexagonal in shape.

According to a preferred embodiment of the present invention, the sealing ring or other screw covering part may be colour coded to identify the fitter. Alternatively different shaped heads may be used for the same purpose. If a bright colour is used for the sealing ring, it will be particularly easily evident whether or not the pretensioner has been tampered with by any unauthorised person.

The invention allows arming of the pretensioner after it is installed in the car and prevents the removal of the pretensioner in an armed state. It also makes it extremely difficult for any unauthorised dealer to fit second hand pretensioners and provides a visual indication to the vehicle owner or inspector if this has happened.

For a better understanding of the invention and to show how the same may be carried into effect, reference will now be made to the accompanying drawings in which:

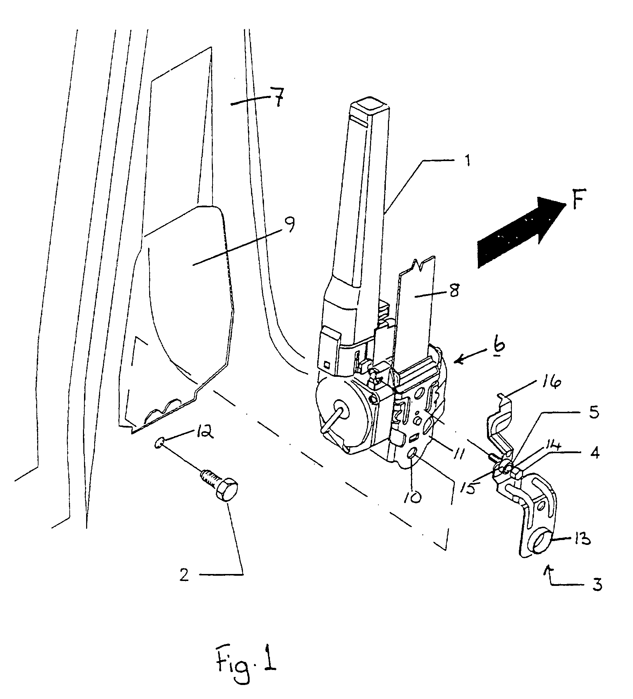

- Figure 1: is a partially exploded, perspective view showing how a pretensioner is fitted in a vehicle using a fitting arrangement according to a first embodiment of the present invention.
- Figure 2: illustrates the components of Figure 1 in an assembled state.
- Figure 3: illustrates a second embodiment of the invention in a partially exploded, perspective view.
- Figure 4: shows the components of Figure 2in an assembled state.

In all Figures a pretensioner tube 1 is attached to a retractor assembly 6 which is fixed to a B-pillar 7 of the side of a vehicle. An arming bracket according to the invention is shown at 3. The forward direction of the vehicle is indicated by arrow F. Seat belt webbing 8 is wound on the retractor 6 spool and exits the retractor vertically parallel to the B-pillar 7. A recess 9 is provided in the B-pillar 7 into which the retractor 6 and pretensioner 1 fits.

The retractor 6 is fixed to the B-pillar 7 by a relatively large diameter screw 2 which secures through a hole 10 in the retractor frame plate 11 and a hole 12 in the B-pillar 7. The arming bracket 3 is then placed adjacent to the retractor 6 so that covering flange 13 overlaps, and preferably completely obscures the head of the fixing screw 2. This makes it very difficult for the pretensioner - retractor assembly to be dismounted from the vehicle unless the arming bracket 3 is first removed and once arming bracket 3 is removed, the pretensioner is automatically disarmed since arm 16 disengages from the pretensioner.

The arming bracket 3 is secured to the retractor frame plate 11 by an arming screw of a special construction. The screw 4 has two heads 4 and 5, coaxial with each other and separated by a relatively weak stem portion 14. The inner head part 5 is covered by a sealing ring 15.

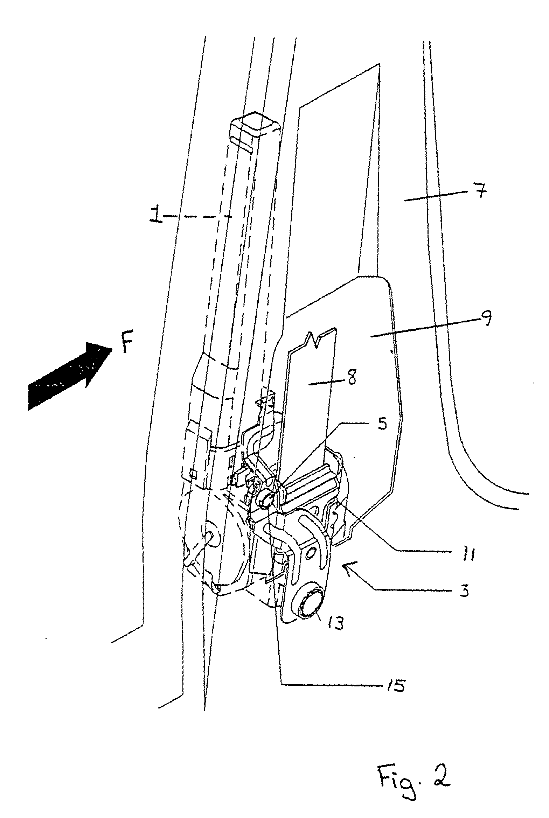

Figure 2 shows clearly how these parts fit together in the assembled state in the recess 9 in the B-pillar 7. As the screw 4 is tightened into its fitting, the torque causes the stem connecting portion 4 between the two heads 4 and 5 shears, thus detaching the outer head 4. The inner head 5 is surrounded by sealing ring 15 and thus protected from unauthorised tampering since the head is not easily exposed for engagement with a spanner or other turning tool. Even if the arming bracket is removed, the pretensioner will be disarmed and cannot be rearmed for unauthorised installation in another vehicle, unless the arming bracket is reattached. This can only be done (without detection) by an authorised dealer with access to a replacement arming screw with double heads and sealing ring intact.

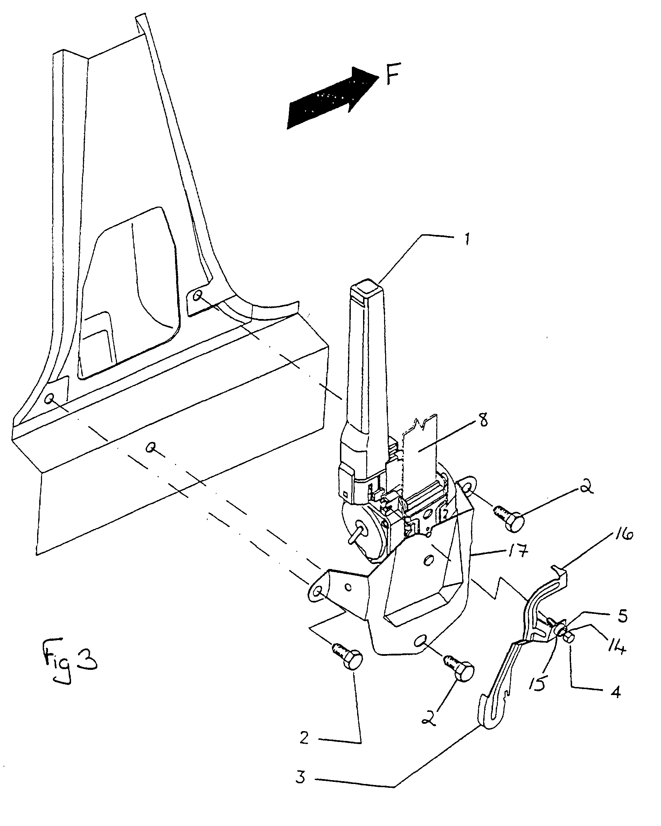

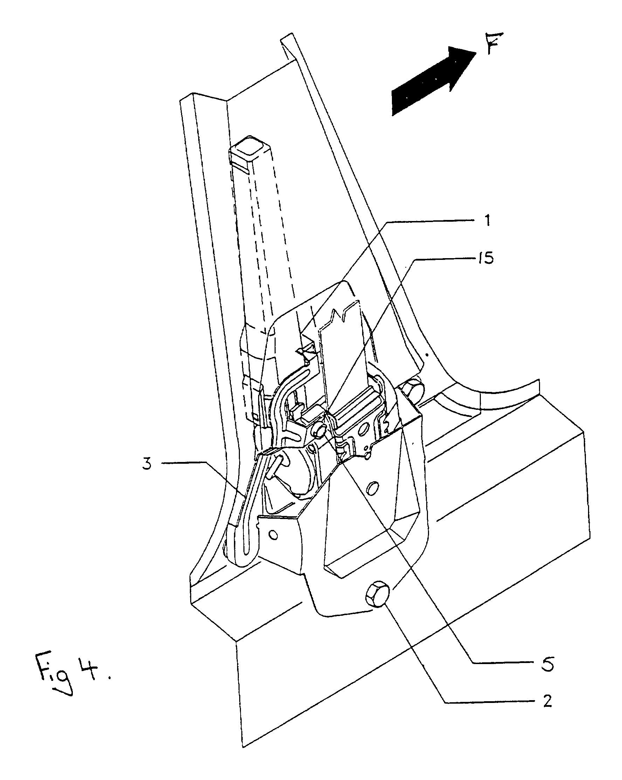

Figures 3 and 4 show an alternative embodiment of the invention. Like parts are denoted by like reference numerals. In this embodiment three retractor fixing screws 2 are used instead of one, and the pretensioner - retractor arrangement is attached using an additional fixing plate 17.

As can be seen in Figure 4, only one of the fixing screws 2 is covered by the arming bracket 3 in the fixing position, but this is sufficient to prevent unauthorised tampering with the pretensioner. It can be clearly seen in Figure 4 that the lever 16 of the arming bracket fits into a recess in the side of the pretensioner to arm it.

## Claims

1. A pretensioner fitting arrangement comprising an arming bracket (3) having a flange (13) operable to arm the pretensioner when the bracket is fitted, and having means for limiting access to the means by which the pretensioner is fitted to the vehicle, the arming bracket (3) comprising a screw for securing it to a retractor frame, **characterised in that** the screw (4) has two head parts (4, 5), coaxial one with the other but arranged so that one head part is covered, the two head parts (4, 5) being connected together by a section (14) which is adapted to break when a torque of a predetermined level is applied to it.

2. A pretensioner fitting arrangement according to claim 1, wherein said one head part (5) is covered by a sealing ring (15).

3. A pretensioner fitting arrangement according to claim 1 or 2, wherein at least one of the screw head parts (4, 5) is hexagonal.

4. A pretensioner fitting arrangement according to claim 3, wherein both of the screw head parts (4, 5) are hexagonal.

5. A pretensioner fitting according to claim 2 or 3 or 4, wherein the sealing ring (15) is colour coded.

6. A pretensioner fitting arrangement according to claims 1 or 2, wherein the screw head parts (4, 5) are different shapes in cross section.

## Patentansprüche

1. Vorspanner-Einbauvorrichtung, die folgendes aufweist: eine Auslösehalterung (3) mit einem Flansch (13), der zur Herstellung der Auslösebereitschaft des Vorspanners betätigt werden kann, wenn die Halterung eingebaut worden ist, und mit Mitteln zur Begrenzung des Zugriffs zu den Mitteln, mit denen der Vorspanner in das Fahrzeug eingebaut wird, wobei die Auslösehalterung (3) eine Schraube zu deren Befestigung an einem Rahmen der Aufrollvorrichtung aufweist, **dadurch gekennzeichnet, daß** die Schraube (4) zwei Kopfteile (4, 5) hat, die koaxial miteinander, aber so angeordnet sind, daß ein Kopfteil bedeckt ist, wobei die beiden Kopfteile (4, 5) durch einen Teilabschnitt (14) miteinander verbunden sind, der dafür vorgesehen ist, zu brechen, wenn ein Drehmoment mit einem vorher festgelegten Pegel auf diesen einwirkt.

2. Vorspanner-Einbauvorrichtung nach Anspruch 1, bei welcher der eine Kopfteil (5) durch einen Dichtungsring (15) bedeckt wird.

3. Vorspanner-Einbauvorrichtung nach Anspruch 1 oder 2, bei der wenigstens einer der Kopfteile (4, 5) der Schraube sechseckig ist.

4. Vorspanner-Einbauvorrichtung nach Anspruch 3, bei der beide Kopfteile (4, 5) der Schraube sechseckig sind.

5. Vorspanner-Einbauvorrichtung nach Anspruch 2 oder 3 oder 4, bei welcher der Dichtungsring (15) eine Farbkodierung hat.

6. Vorspanner-Einbauvorrichtung nach Anspruch 1 oder 2, bei der die Kopfteile (4, 5) der Schraube im Querschnitt eine unterschiedliche Form haben.

## Revendications

1. Mécanisme d'ajustement d'un dispositif de prétension comprenant une console d'armement (3) comportant une bride (13) servant à armer le dispositif de prétension après l'ajustement de la console, et comportant un moyen pour limiter l'accès au moyen servant à ajuster le dispositif de prétension dans le véhicule, la console d'armement (3) comprenant une vis destinée à assurer la fixation correspondante dans un cadre de l'enrouleur, **caractérisé en ce que** la vis (4) comporte deux parties de tête (4, 5), coaxiales l'une par rapport à l'autre, mais agencées de sorte qu'une partie de tête est couverte, les deux parties de tête (4, 5) étant connectées par une section (14) destinée à se briser lorsqu'un couple d'un niveau prédéterminé y est appliqué.

2. Mécanisme d'ajustement d'un dispositif de prétension selon la revendication 1, dans lequel ladite une partie de tête (5) est couverte par une bague d'étanchéité (15).

3. Mécanisme d'ajustement d'un dispositif de prétension selon les revendications 1 ou 2, dans lequel au moins une des parties de tête de la vis (4, 5) est hexagonale.

4. Mécanisme d'ajustement d'un dispositif de prétension selon la revendication 3, dans lequel les deux parties de tête de la vis (4, 5) sont hexagonales.

5. Mécanisme d'ajustement d'un dispositif de prétension selon les revendications 2, 3 ou 4, dans lequel la bague d'étanchéité (15) comporte un codage de couleur.

6. Mécanisme d'ajustement d'un dispositif de prétension selon les revendications 1 ou 2, dans lequel les parties de tête de la vis (4, 5) ont des formes différentes en section transversale.
